# EUROPÄISCHE PATENTSCHRIFT

(11) **EP 3 486 607 B1**
(45) Veröffentlichungstag und Bekanntmachung des Hinweises auf die Patenterteilung: **01.09.2021**
(21) Anmeldenummer: 17202639.5
(22) Anmeldetag: 20.11.2017
(51) Int. Cl.: G01C 11/06, G01B 11/02, G06T 7/60, G06T 7/579, G06F 3/0488

(54) **BILDBASIERTE KANTENVERMESSUNG**
IMAGE-BASED EDGE MEASUREMENT
DISPOSITIF DE MESURE D'ARÊTES À BASE D'IMAGE

(43) Veröffentlichungstag der Anmeldung: 22.05.2019
(73) Patentinhaber: Leica Geosystems AG, 9435 Heerbrugg (CH)
(72) Erfinder: VAN DER ZWAN, Elmar Vincent, 9428 Walzenhausen (CH); HELLER, Tobias, CH-9445 Rebstein (CH); WILTSCHE, Siegfried, A-6922 Wolfurt (AT)
(74) Vertreter: Kaminski Harmann

(56) Entgegenhaltungen:
- DE-A1-102010 038 507
- DE-A1-102013 202 658
- US-A1- 2016 139 774
- US-B2- 6 760 117
- CurvSurf: "Measuring & Tracking of Boxes in Real-Time", youtube, 20. Juni 2016 (2016-06-20), Seite 2 pp., XP054978356, Gefunden im Internet: URL:https://www.youtube.com/watch?v=mEHaR2 mjm9c [gefunden am 2018-05-17]
- e-con Systems: "Box dimension measurement using Tara - Stereo Camera", You Tube, 12. Juli 2016 (2016-07-12), Seiten 1-2, XP054978362, Gefunden im Internet: URL:https://www.youtube.com/watch?v=DPpQO3 3u1jw [gefunden am 2018-05-17]

## Beschreibung

Die vorliegende Erfindung betrifft ein Verfahren zur automatischen bildbasierten Kantenvermessung und eine handgehaltene Photogrammetrie-Vorrichtung zum Ausführen eines solchen Verfahrens.

Vorrichtungen und Verfahren zur photogrammetrischen Bildaufnahme sind im Stand der Technik grundsätzlich bekannt und werden vielfältig eingesetzt, um Messungen in Bildern vorzunehmen, also insbesondere zum Ermitteln von Dimensionen in einem Bild, wie zum Beispiel von Entfernungen zwischen abgebildeten Merkmalen.

Beispielsweise zeigt die EP 2 918 972 A2 ein Verfahren und ein entsprechendes handhaltbares Gerät zum Erstellen eines Raummodells mittels Stereophotogrammetrie.

Unter der Bezeichnung "CurvSurf" wird in einem Video ein Vermessen und Verfolgen von kubischen Behältern mittels einer Stereokamera dargestellt, wobei Messwerte für Kantenlängen des Behälters automatisch in einem Bild der Behälter dargestellt werden. Dieses Video ist abrufbar im Internet unter https://www.youtube.com/watch?v=mEHaR2mjm9c.

Die US 2015/0317070 A1 beschreibt ein handhaltbares Gerät mit einer einzigen Kamera und einem Laserentfernungsmesser, mit welchem bildbasierte Messungen vorgenommen werden können.

Solche handhaltbaren Geräte weisen regelmässig Anzeigeeinheiten zum Darstellen einer aufgenommenen Szene auf. Beispielsweise mittels Touchscreen ist es dabei häufig möglich, in dem Bild der Szene Punkte zu markieren, um einen Abstand der Punkte in der Szene berechnen und darstellen zu lassen. Zumindest theoretisch können so akkurate 3D-Messungen, beispielsweise von Kanten, in dem Bild vorgenommen werden und 3D-Modelle erstellt werden. In der Praxis gestaltet sich dies insbesondere für Laien und ungeübte Verwender allerdings häufig schwierig.

Es ist daher eine Aufgabe der vorliegenden Erfindung, eine verbesserte Vorrichtung und ein verbessertes Verfahren zum bildbasierten Vermessen einer Szene bereitzustellen.

Insbesondere ist es eine Aufgabe, eine solche Vorrichtung und ein solches Verfahren bereitzustellen, mittels welcher die Längen von Kanten in der Szene einfacher, schneller und genauer ermittelbar sind, insbesondere unabhängig von einer Qualifikation eines Benutzers und insbesondere mit gleichbleibender Genauigkeit reproduzierbar.

Eine weitere Aufgabe ist es, eine solche Vorrichtung und ein solches Verfahren bereitzustellen, die für einen ungeübten Benutzer einfach und intuitiv handhabbar sind.

Mindestens eine dieser Aufgaben wird durch die Verwirklichung der kennzeichnenden Merkmale der unabhängigen Ansprüche gelöst. Vorteilhafte Ausgestaltungen der Erfindung finden sich dabei in den jeweils abhängigen Ansprüchen.

Ein erster Aspekt der Erfindung betrifft ein Verfahren zum bildbasierten Vermessen einer Szene mittels einer handgehaltenen Vorrichtung. Dieses Verfahren weist eine Aufnahme von mindestens einem ersten Bild und einem zweiten Bild der Szene durch mindestens eine Kamera der Vorrichtung, wobei das erste Bild und das zweite Bild einen überlappenden Bildbereich aufweisen, ein photogrammetrisches Auswerten des ersten und des zweiten Bildes, und eine graphische Ausgabe einer Abbildung der Szene auf einer Anzeigeeinheit auf. Das Verfahren weist erfindungsgemäss ausserdem eine automatisch ablaufende Kantenvermessungsfunktionalität auf, im Rahmen welcher jeweils ohne Benutzereingriff anhand der Bilder der Szene Kanten in der Szene identifiziert werden, basierend auf den photogrammetrisch ausgewerteten Bildern Kantenlängen der identifizierten Kanten ermittelt werden, und die ermittelten Kantenlängen in der Abbildung der Szene angezeigt werden. Das Verfahren weist erfindungsgemäss ausserdem ein Identifizieren von Flächen in den Bildern und ein Markieren der identifizierten Flächen in der Abbildung der Szene auf. Dabei werden die Flächen anhand typischer Dimensionen und/oder Muster identifiziert, wobei die Flächen Fenstern oder Türen in der Szene zugeordnet sind und für Fenster bzw. Türen typische Dimensionen aufweisen, und/oder durch einen lernfähigen Algorithmus identifiziert.

Gemäss einer Ausführungsform des Verfahrens werden im Rahmen der Kantenvermessungsfunktionalität identifizierte Kanten in der Abbildung der Szene graphisch hervorgehoben, beispielsweise farblich markiert.

Gemäss einer weiteren Ausführungsform umfasst das Verfahren eine stereoskopische Aufnahme eines ersten Bildes der Szene durch eine erste Kamera der Vorrichtung und eines zweiten Bildes der Szene durch eine zweite Kamera der Vorrichtung, wobei das erste Bild und das zweite Bild einen überlappenden Bildbereich aufweisen, und ein stereophotogrammetrisches Auswerten des ersten und des zweiten Bildes. Dabei werden anhand der von beiden Kameras aufgenommenen Bilder der Szene Kanten in der Szene identifiziert und basierend auf den stereophotogrammetrisch ausgewerteten Bildern Kantenlängen der identifizierten Kanten ermittelt.

In einer anderen Ausführungsform umfasst das Verfahren eine Entfernungsmessung zu mindestens einer Oberfläche der Szene, insbesondere gleichzeitig mit der Aufnahme eines oder mehrerer Bilder (beispielsweise stereoskopisch aufgenommener Bilder), wobei eine gemessene Entfernung beim (stereo-)photogrammetrischen Auswerten berücksichtigt wird, insbesondere zum Skalieren.

In einer anderen Ausführungsform umfasst das Ermitteln der Länge einer Kante ein Identifizieren von zwei Endpunkten der Kante und ein Ermitteln einer Entfernung zwischen den zwei Endpunkten mittels Photogrammetrie bzw. Stereophotogrammetrie.

Gemäss einer weiteren Ausführungsform des Verfahrens umfasst das (stereo-)photogrammetrische Auswerten des ersten und des zweiten Bildes ein Generieren eines 3D-Modells der Szene, insbesondere in Form einer Punktwolke. Zum Ermitteln der Länge einer in den Bildern identifizierten Kante kann dabei die entsprechende Kante im 3D-Modell identifiziert werden. Auch kann das 3D-Modell benutzt werden, um Kanten zu identifizieren.

Gemäss einer weiteren Ausführungsform des Verfahrens werden im Rahmen der Kantenvermessungsfunktionalität unvollständige Kanten ermittelt, wobei eine Kante dann als unvollständige Kante ermittelt wird, wenn kein oder nur ein Endpunkt dieser Kante im ersten und/oder zweiten Bild abgebildet ist.

Unvollständige Kanten können in der Abbildung der Szene graphisch anders hervorgehoben werden als vollständige Kanten, deren zwei Endpunkte in mindestens einem der aufgenommenen Bilder (z. B. bei stereoskopischer Aufnahme im ersten und/oder zweiten Bild) abgebildet sind.

Optional werden Längen für unvollständige Kanten entweder gar nicht erst ermittelt oder zumindest nicht ohne Benutzereingriff angezeigt, um eine Verwirrung des Benutzers zu vermeiden.

Gemäss einer weiteren Ausführungsform des Verfahrens wird eine Eingabeaufforderung zusammen mit der Abbildung der Szene auf der Anzeigeeinheit angezeigt, wobei die Eingabeaufforderung eine Aufforderung an einen Benutzer enthält, einen Bereich der Abbildung zu markieren, in welchem Kanten identifiziert werden sollen.

In einer anderen Ausführungsform können Werte für die Flächeninhalte der identifizierten Flächen automatisch berechnet und in der Abbildung der Szene angezeigt werden, insbesondere ohne weiteren Benutzereingriff.

In einer Ausführungsform werden die Flächen anhand einer Vielzahl von Kanten (beispielsweise vier Kanten) identifiziert, die die Flächen umschliessen. Eine Länge der Kanten bzw. ein Umfang der Fläche können optional automatisch berechnet und in der Abbildung der Szene angezeigt werden, insbesondere ohne weiteren Benutzereingriff.

Gemäss einer weiteren Ausführungsform des Verfahrens basiert die Abbildung der Szene auf mindestens einem der aufgenommenen Bilder der Szene, die auch photogrammetrisch ausgewertet werden.

Ein zweiter Aspekt der Erfindung betrifft eine handhaltbare Vorrichtung zum bildbasierten Vermessen einer Szene, insbesondere gemäss einem Verfahren des ersten Aspekts der Erfindung. Die Vorrichtung weist ein Gehäuse mit einer Vorderseite und einer Rückseite, mindestens eine Kamera zur Aufnahme von Bildern der Szene, eine Steuereinheit zum Bewirken einer Aufnahme von Bildern der Szene, eine Auswerteeinheit mit einem Algorithmus zum photogrammetrischen Auswerten der Bilder, und eine Anzeigeeinheit, die auf der Vorderseite angeordnet ist, zur Anzeige einer Abbildung der Szene auf. Erfindungsgemäss weist die Auswerteeinheit einen Algorithmus zum Ausführen einer automatisch ablaufenden Kantenvermessungsfunktionalität und einer auf dieser basierenden Mustererkennungsfunktionalität auf, wobei die Auswerteeinheit im Rahmen der Kantenvermessungsfunktionalität dazu ausgestaltet ist, jeweils ohne Benutzereingriff anhand der Bilder der Szene Kanten in der Szene zu identifizieren, und basierend auf den photogrammetrisch ausgewerteten Bildern Kantenlängen der identifizierten Kanten zu ermitteln, und im Rahmen der Mustererkennungsfunktionalität dazu ausgestaltet ist, in den Bildern Flächen zu identifizieren, wobei die Flächen anhand typischer Dimensionen und/oder Muster identifiziert werden, wobei die Flächen Fenstern oder Türen in der Szene zugeordnet sind und für Fenster bzw. Türen typische Dimensionen aufweisen, und/oder die Flächen durch einen lernfähigen Algorithmus identifiziert werden. Die Steuereinheit ist dabei dazu ausgestaltet, auf der Anzeigeeinheit die ermittelten Kantenlängen als Werte in der Abbildung der Szene anzeigen zu lassen, und die identifizierten Flächen in der Abbildung der Szene zu markieren.

In einer Ausführungsform ist die erfindungsgemässe Vorrichtung als eine Stereophotogrammetrie-Vorrichtung ausgestaltet und weist eine erste Kamera und eine zweite Kamera zur Aufnahme von Bildern der Szene auf, wobei die Kameras mit einem festen Abstand zueinander auf der Rückseite angeordnet sind. Die Steuereinheit ist entsprechend zum Bewirken einer stereoskopischen Aufnahme von Bildern der Szene mit einer Aufnahme eines ersten Bildes mittels der ersten Kamera und eines zweiten Bildes mittels der zweiten Kamera ausgestaltet ist, und die Auswerteeinheit weist einen Algorithmus zum stereophotogrammetrischen Auswerten des ersten Bildes und des zweiten Bildes auf.

In einer weiteren Ausführungsform weist die erfindungsgemässe Vorrichtung einen Laserentfernungsmesser auf, wobei die Steuereinheit zum Bewirken einer Messung einer Entfernung zu einer Oberfläche der Szene mittels des Laserentfernungsmesser ausgestaltet ist, insbesondere gleichzeitig mit der Aufnahme des mindestens einen Bildes, und die Auswerteeinheit dazu ausgestaltet ist, die Entfernung beim (stereo-)photogrammetrischen Auswerten zu berücksichtigen.

In einer anderen Ausführungsform weist die erfindungsgemässe Vorrichtung eine Speichereinheit zum Speichern von Bilddaten der ersten und zweiten Kamera, Koordinaten von Endpunkten identifizierter Kanten, und den Werten für die Kantenlängen auf.

In einer weiteren Ausführungsform weist die erfindungsgemässe Vorrichtung einen Touchscreen als Anzeigeeinheit auf, wobei die Steuereinheit dazu ausgestaltet ist, auf der Anzeigeeinheit zusammen mit der Abbildung der Szene eine Eingabeaufforderung anzeigen zu lassen, insbesondere wobei die Eingabeaufforderung eine Aufforderung an einen Benutzer enthält, einen Bereich der Abbildung zu markieren, in welchem Kanten identifiziert werden sollen.

Ein weiterer Aspekt der Erfindung betrifft ein Computerprogrammprodukt mit Programmcode, der auf einem maschinenlesbaren Träger gespeichert ist, zur Ausführung eines Verfahrens gemäss dem ersten Aspekt, wobei das Programm in einer Recheneinheit der Vorrichtung, insbesondere gemäss dem zweiten Aspekt, ausgeführt wird.

Die erfindungsgemässe Vorrichtung und das erfindungsgemässe Verfahren werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
- Fig. 1a-d: beispielhafte Ausführungsformen einer erfindungsgemässen handgehaltenen Photogrammetrie-Vorrichtung;
- Fig. 2: eine Aufnahme eines Bildes mittels einer erfindungsgemässen Stereophotogrammetrie-Vorrichtung;
- Fig. 3: eine beispielhafte Anzeige eines Bildes einer Szene auf einer Anzeigeinheit einer erfindungsgemässen Stereophotogrammetrie-Vorrichtung;
- Fig. 4: in der Anzeige aus Fig. 3 zusätzlich angezeigte Inhalte;
- Fig. 5: ein Flussdiagramm zur Illustration einer beispielhaften Ausführungsform des erfindungsgemässen Verfahrens;
- Fig. 6a-b: beispielhafte Funktionalitäten zur Auswahl eines Anzeigebereichs durch einen Benutzer; und
- Fig. 7a-b: ein Erkennen und Kennzeichnen von Mustern in einem Bild einer Szene.

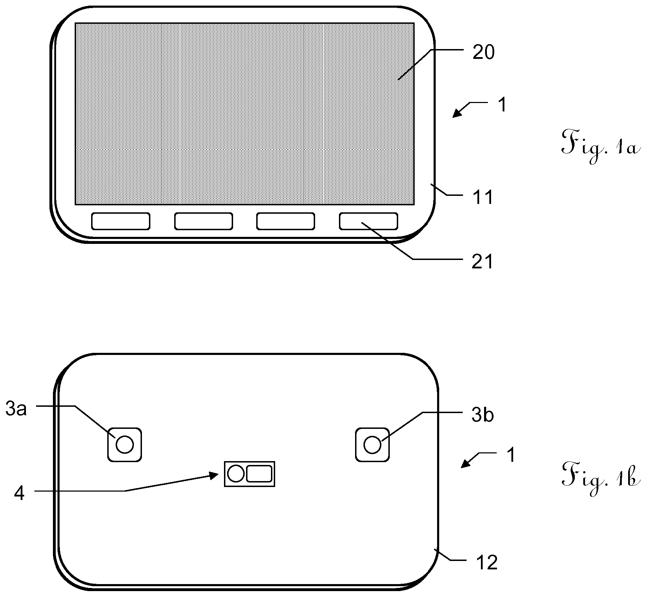

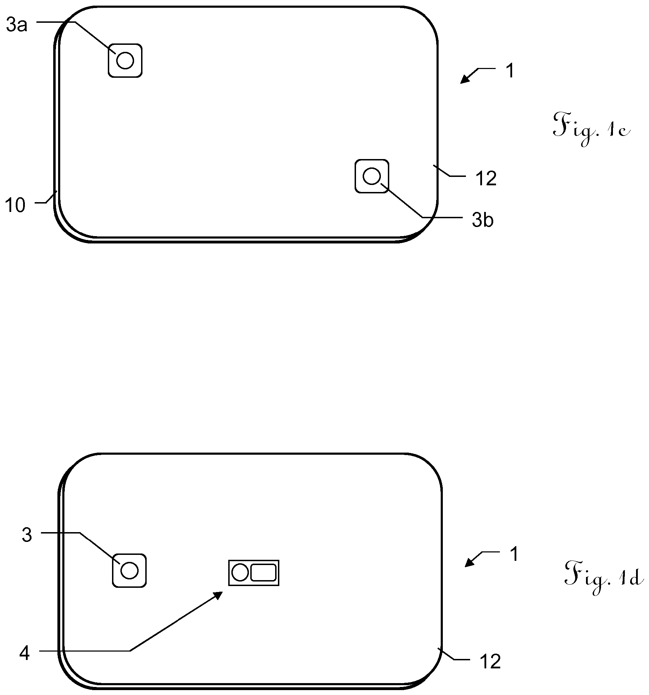

Die Figuren 1a bis 1d zeigen beispielhafte Ausführungsformen einer erfindungsgemässen Photogrammetrie-Vorrichtung 1. Dabei zeigt Figur 1a eine beispielhafte Vorderseite 11 mit einer Anzeigeeinheit 20 und Tasten 21 zur Bedienung der Vorrichtung 1, und die Figuren 1b, 1c und 1d zeigen drei beispielhafte Ausführungsformen einer Kameraanordnung auf der Rückseite 12 der Photogrammetrie-Vorrichtung 1.

In den Figuren 1b und 1c ist die Vorrichtung als Stereophotogrammetrie-Vorrichtung 1 mit jeweils zwei Kameras 3a und 3b ausgestaltet. Die Kameras 3a, 3b sind dabei mit einer festen Stereobasis zueinander angeordnet.

In Figur 1b verläuft die Stereobasis parallel zu einer Längsachse der Vorrichtung; das heisst die Kameras 3a, 3b sind nebeneinander auf der gleichen Höhe des Gehäuses angeordnet. In Figur 1c ist die Stereobasis diagonal zur Längsachse, das heisst die Kameras 3a, 3b sind versetzt angeordnet. Die letztere Anordnung ist besonders vorteilhaft für die Vermessung von Gebäuden und wird in der Patentanmeldung EP17202630.4 näher beschrieben.

Eine mit dem beispielhaft in Figur 1b gezeigten Laserentfernungsmesser 4 erfasste Entfernung kann insbesondere zum Skalieren der von den Kameras 3a, 3b aufgenommenen Bildern verwendet werden, was die Genauigkeit photogrammetrischer Messungen erhöht. Als interne, hier nicht dargestellte Komponenten weist die Vorrichtung 1 eine Speicherkomponente zum Speichern von Bild- und Messdaten und eine Rechenkomponente mit Steuer- und Auswerteeinheit auf. Die Steuereinheit ist insbesondere dazu ausgestaltet, eine stereoskopische Bildaufnahme und gleichzeitige Entfernungsmessung durch die Kameras 3a, 3b und den Entfernungsmesser 4, sowie die Anzeige von Bild- und Messdaten auf der Anzeigeeinheit 20 zu steuern. Die Auswerteeinheit weist Algorithmen sowohl zur Kantendetektion in den Kamerabildern als auch zum stereophotogrammetrischen Auswerten der Kamerabilder auf.

Figur 1d zeigt eine entsprechende Photogrammetrie-Vorrichtung 1, die im Gegensatz zu den in den Figuren 1b und 1c gezeigten neben einem Laserentfernungsmesser 4 nur eine einzige Kamera 3 aufweist. Auch die Vorrichtung 1 der Figur 1d weist eine Speicherkomponente zum Speichern von Bildund Messdaten und eine Rechenkomponente mit Steuer- und Auswerteeinheit auf. Die Steuereinheit ist insbesondere dazu ausgestaltet, eine Bildaufnahme durch die Kamera 3 und eine gleichzeitige Entfernungsmessung durch den Entfernungsmesser 4, sowie die Anzeige von Bild- und Messdaten auf der Anzeigeeinheit 20 zu steuern. Die Auswerteeinheit weist Algorithmen sowohl zur Kantendetektion in den Kamerabildern als auch zum photogrammetrischen Auswerten der Kamerabilder auf.

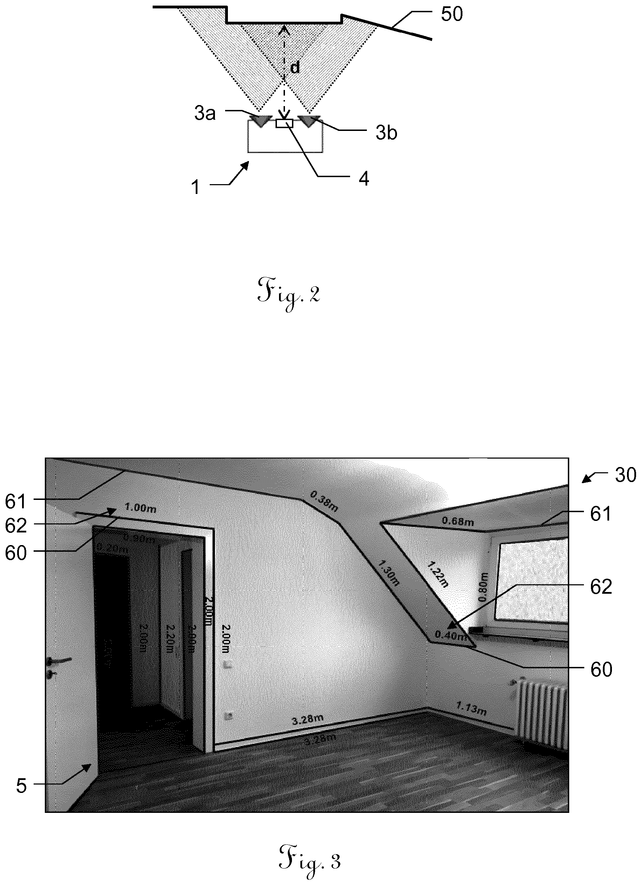

Figur 2 illustriert schematisch das Prinzip der stereoskopischen Aufnahme mittels der Vorrichtung 1 aus den Figuren 1a-c. Dabei wird durch die erste Kamera 3a und die zweite Kamera 3b im wesentlichen gleichzeitig ein Bild aufgenommen. Mittels der stereoskopisch aufgenommenen Bilder kann in bekannter Weise die Szene stereophotogrammetrisch vermessen werden. Zusätzlich kann mittels eines Laserentfernungsmessers 4 der Vorrichtung 1 - im zeitlichen Zusammenhang mit den Bildaufnahmen - eine Entfernung d zu einer Oberfläche 50 der Szene gemessen werden. Diese Entfernung d kann insbesondere zur Skalierung stereophotogrammetrisch gemessener Dimensionen verwendet werden.

Figur 3 zeigt eine von der Vorrichtung aufgenommene und auf der Anzeigeeinheit 20 angezeigte Abbildung 30 einer beispielhaften Szene 5. Die Abbildung kann insbesondere auf einem oder beiden Kamerabildern basieren.

Mittels Kantenextraktion bzw. -detektion sind in den 2D-Bildern der beiden Kameras 3a, 3b diverse Kanten 60, 61 identifizierbar. Aufgrund der stereoskopischen Aufnahme der Bilder ist mittels Stereophotogrammetrie die jeweilige Länge dieser Kanten 60, 61 ermittelbar.

In dem auf der Anzeigeeinheit 20 angezeigten Bild 30 der Szene 5 werden alle identifizierten Kanten 60, 61 zur besseren Erkennbarkeit für einen Benutzer automatisch optisch hervorgehoben. Dies kann insbesondere durch eine farbliche Markierung erfolgen.

Solche Kanten 60, die vollständig in dem Bild 30 liegen, und deren jeweilige Länge daher photogrammetrisch vermessbar ist, sind zusätzlich mit einer Längenangabe 62 versehen, die der ermittelten Länge der jeweiligen Kante 60 entspricht. Zum Vermessen einer ermittelten Kante 60 können Punkte auf bzw. an der jeweiligen Kante 60 im Bild 30 stereophotogrammetrisch vermessen werden (insbesondere Kantenendpunkte), wodurch ein 3D-Modell der Kante 60 ableitbar ist, deren Länge so bestimmbar ist.

Bei nur teilweise im Bild 30 liegenden Kanten 61, also solchen, die über den Rand der aufgenommenen Bilder hinausreichen, ist die komplette Länge nicht ermittelbar. Zwar kann die Länge desjenigen Teils der Kante 61, der sich im Bild 30 befindet, photogrammetrisch ermittelt werden, diese Information ist aber in der Regel nutzlos und wird daher standardmässig nicht dargestellt. Optional kann dem Benutzer natürlich die Möglichkeit gegeben werden, sich auch diese Kanten 61 mit einer Längenangabe für die im Bild 30 befindliche Teillänge anzeigen zu lassen. Die nur teilweise im Bild liegenden Kanten 61 können beispielsweise mit einer anderen Farbe gekennzeichnet werden als komplett im Bild 30 befindliche Kanten 60.

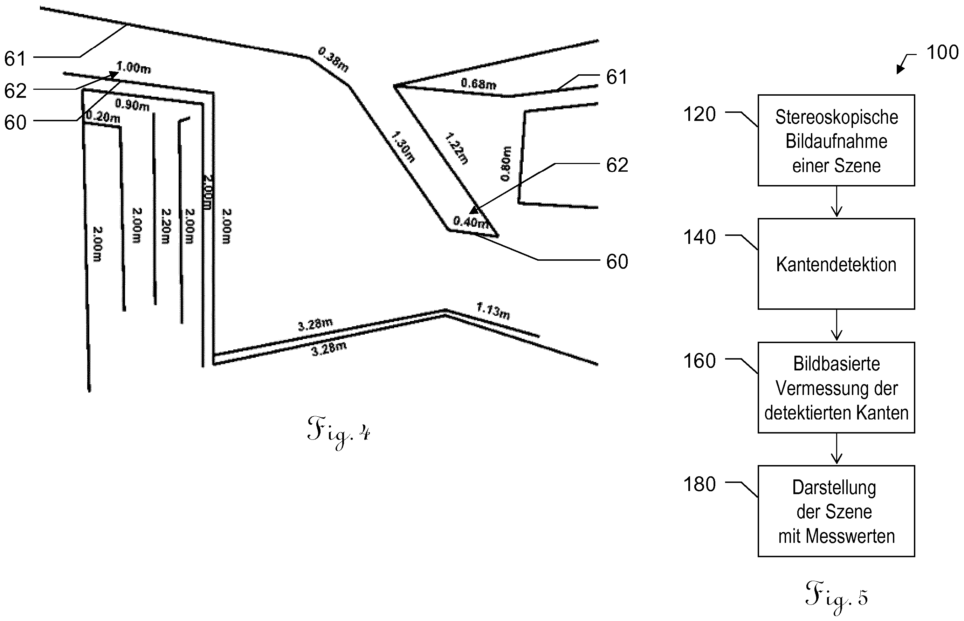

Figur 4 zeigt zur Verdeutlichung die dem Bild 30 der Szene 5 aus Figur 3 hinzugefügten optischen Hervorhebungen der identifizierten Kanten 60, 61 und ermittelten Längenangaben 62 (ohne das Bild selbst). Das Überlagern des Bildes mit den Kanten 60, 61 und Längenangaben 62 kann nach der Aufnahme der Bilder vorteilhaft ohne jeden weiteren Benutzereingriff, d. h. automatisch, erfolgen. Vorzugsweise können die Messergebnisse speicherbar und exportierbar sein. Auf bekannte Art und Weise können zusätzliche Messungen in dem Bild vorgenommen werden.

Optional kann grundsätzlich ein 3D-Modell der Szene erstellt werden, wobei die Kantenvermessung auf dem 3D-Modell erfolgt. Dazu werden die in den 2D-Bildern identifizierten Kanten 60, 61 mit den entsprechenden Kanten im 3D-Modell abgeglichen. Ebenso können Kanten im 3D-Modell unter Verwendung von durch das Modell bereitgestellten 3D-Informationen aufgefunden und vermessen werden und dann in ein 2D-Bild übertragen werden.

Die Beziehung zwischen 2D-Bildern und 3D-Modell ist photogrammetrisch vorgegeben, wodurch die räumliche Ausdehnung der in den Bildern zweidimensionalen Abbildungen der Kanten ermittelbar ist.

Alternativ werden nur die Endpunkte der Kanten 60, 61 in den Kamerabildern identifiziert. Anschliessend können mittels Stereophotogrammetrie 3D-Koordinaten der Endpunkte bestimmt werden. Die 3D-Entfernung zwischen den Endpunkten entspricht der Kantenlänge.

Die Geometrie des 3D-Modells kann dabei helfen, die interessanten Kanten auszuwählen. So können zum Beispiel nur solche Kanten, die nicht in einer bestimmten Ebene liegen, angezeigt werden, oder ein Machine-Learning-Algorithmus benutzt werden, um mittels Tiefeninformationen alle Fenster im Bild zu finden.

Auch die Unterscheidung der identifizierten Kanten 60, 61 in vollständige Kanten 60 und unvollständige Kanten 61 kann über ein Identifizieren der Endpunkte erfolgen. Endet eine Kante am Bildrand bzw. ausserhalb eines stereophotogrammetrisch auswertbaren Bereichs, handelt es sich um eine unvollständige Kante 61, deren komplette Länge nicht, bzw. nicht ohne zusätzliche Schritte, ermittelbar ist.

Figur 5 illustriert anhand eines Flussdiagramms eine beispielhafte Ausführungsform des erfindungsgemässen Verfahrens 100. Zunächst richtet der Benutzer die Vorrichtung auf die aufzunehmende Szene aus und löst eine stereoskopische Bildaufnahme 120 mittels der beiden digitalen Kameras der Vorrichtung aus. Die erhaltenen Bilddaten können vorzugsweise in einer Speichereinheit der Vorrichtung gespeichert werden. Alternativ können auch zwei Aufnahmen mit einer Vorrichtung mit nur einer Kamera gemacht werden (vgl. Figur 1d).

Mittels Kantendetektion 140 basierend auf mindestens einem der Bilder werden Kanten in der Szene identifiziert. Dazu können verschiedene Algorithmen und Operatoren verwendet werden, z. B. Sobel-Operator oder Canny-Algorithmus.

Durch die stereoskopische Bildaufnahme 120 sind die Bilder stereophotogrammetrisch auswertbar. Entsprechend ist auch eine bildbasierte Vermessung 160 der detektierten Kanten möglich. So können den Endpunkten der detektierten Kanten dreidimensionale Koordinaten zugeordnet werden und eine Entfernung zwischen zwei Endpunkten derselben Kante berechnet werden. Sofern die Kante gerade ist, entspricht die berechnete Entfernung zwischen den Endpunkten der Kantenlänge.

Einem Benutzer kann somit eine Darstellung 180 der Szene präsentiert werden - beispielsweise auf einer Anzeigeeinheit der Vorrichtung oder auf einem externen Computermonitor -, wobei in der Abbildung der Szene die detektierten Kanten optisch hervorgehoben dargestellt und die berechneten Kantenlängen direkt im Bild angezeigt werden können.

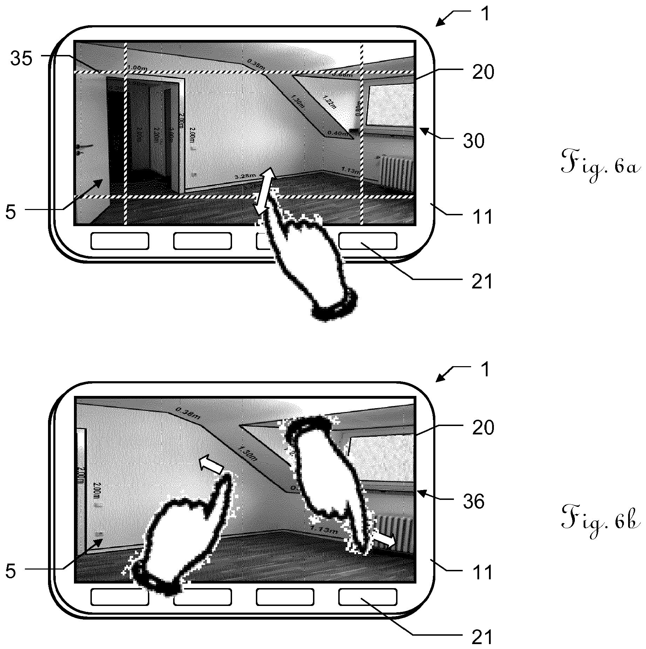

Nachteilig bei der automatischen Kantendetektion ist einerseits, dass manche Kanten vom menschlichen Auge leichter erkannt werden als von Algorithmen, und andererseits, dass der Algorithmus nicht weiss, welche Kanten für den Benutzer von Interesse sind und welche nicht. In einer Ausführungsform des erfindungsgemässen Verfahrens bzw. der erfindungsgemässen Vorrichtung kann der Benutzer daher Bereiche in der Szene 5 definieren, die ihn besonders interessieren. Zwei rein beispielhafte Lösungen werden in den Figuren 6a und 6b gezeigt. Dargestellt ist jeweils die Vorderseite 11 der Vorrichtung aus Figur 1a, wobei das Bild 30 der Szene 5 aus Figur 3 auf der Anzeigeeinheit 20 dargestellt wird.

Bei der Kantendetektion liegt die Priorität meist im Zentrum eines Bildes, daher kann standardmässig nur in der Bildmitte nach Kanten gesucht werden, bzw. nur nach Kanten, die zumindest teilweise in der Bildmitte liegen. Insbesondere kann die Priorität bei Kanten liegen, die mittig im Bild liegen und auf etwa 50-90% der Bildlänge kommen; beispielsweise in Figur 3 die Höhe der Tür oder die Wandlänge neben der Tür. Alternativ kann auch bevorzugt an den Bildrändern nach Kanten gesucht werden. Dies ist insbesondere sinnvoll, wenn das Bild eine einzelne Wand mit deren Kanten umfasst.

In Figur 6a ist ein Rahmen 35 über das Bild 30 gelegt, der den Suchbereich auf die Bildmitte beschränkt, der aber durch den Benutzer so anpassbar ist, dass ein für ihn besonders interessanter Bereich auswählbar ist. Ist die Anzeigeeinheit 20 wie hier dargestellt ein Touchscreen, kann dies durch Wischbewegungen (dargestellt durch Pfeile) mit einem Finger des Benutzers erfolgen. Der Benutzer kann durch Verschieben des Rahmens 35 den Suchbereich verschieben, vergrössern oder verkleinern.

Entweder wird dann nur im vom Benutzer ausgewählten Bereich nach Kanten gesucht, oder es wird dort besonders intensiv nach vorhandenen Kanten gesucht, bzw. die Kantenlängen werden dort mit besonders hoher Genauigkeit ermittelt.

Optional kann die Kantenerkennung auch eine lernfähige Mustererkennungsfunktionalität basierend auf Machine-Learning-Algorithmen aufweisen. Dabei kann der Algorithmus lernen, welche Arten von Kanten in der Regel von Interesse sind. Dies kann beispielsweise anhand einer Messhistorie des Benutzers oder basierend auf vom Hersteller oder extern bereitgestellten Daten erfolgen.

In Figur 6b ist eine Zoomfunktionalität dargestellt. Der Benutzer kann auch nach der Darstellung der Kanten und deren Längen einen Bereich 36 des Bildes heranzoomen - beispielsweise durch entsprechende Wischbewegungen auf dem Touchscreen 20 mit seinen Fingern. Auch auf diese Weise kann der für den Benutzer interessante Bereich festgelegt werden. So kann beispielsweise auch eine einzelne Kante herangezoomt werden, die den Benutzer interessiert. Diese kann dann mit besonderer Genauigkeit erkannt und vermessen werden.

Auch können darzustellende Kanten über die Tiefeninformation ausgewählt werden. Beispielsweise kann der Benutzer über einen Schieberegler (Slider) die Tiefe nach vorne und hinten begrenzen, um nur Kanten in einer bestimmten für ihn interessanten Ebene zu erhalten. Identifizierte Kanten in einem für den Benutzer nicht interessanten Hinter- oder Vordergrund, die sonst die Übersichtlichkeit beeinträchtigen könnten, werden so nicht hervorgehoben.

Optional kann der Benutzer auch Kanten oder Punkte im Bild markieren. Beispielsweise kann ein Abstand von einer Kante zu einem Punkt ermittelt werden. Ebenso können zwei parallele Kanten markiert werden, woraufhin deren Abstand zueinander berechnet und angezeigt wird. Dies ist beispielsweise dann hilfreich, wenn die Breite eines Raums ermittelt werden soll, die Kanten zum Boden und zur Decke aber nicht vollständig im Bild angezeigt werden.

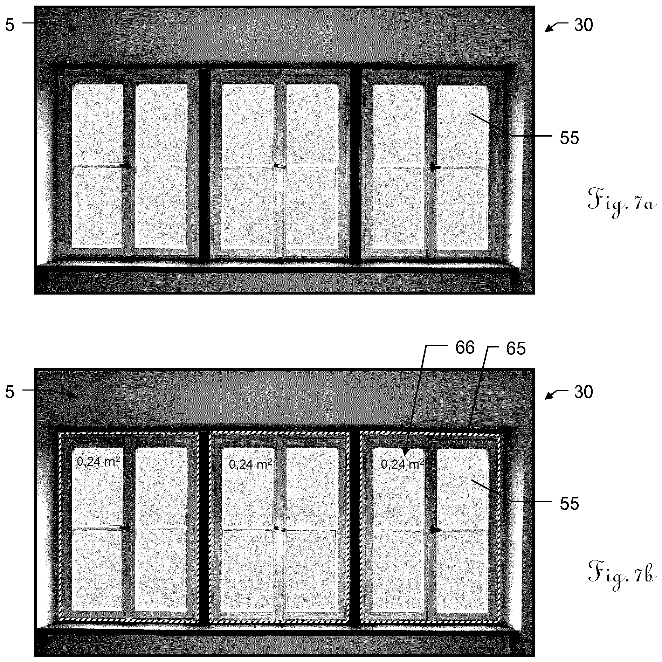

Die Figuren 7a und 7b illustrieren eine auf der Kantendetektion basierende Mustererkennungsfunktionalität einer beispielhaften Ausführungsform einer erfindungsgemässen Photogrammetrie-Vorrichtung 1. Dargestellt ist ein Bild 30 einer Szene 5 mit drei Fenstern 55 als Beispiele für mittels Kantendetektion erkennbare Muster. Erkennbare Muster sind dabei insbesondere typische industrielle Formgebungen wie Fenster oder Türen. In Figur 7b sind die detektierten Kanten 65 der Fenster 55 hervorgehoben. Es ist nicht nur möglich, wie in Figur 3 gezeigt, die Kantenlängen anzugeben, sondern darüber hinaus auch die von den Kanten 65 der erkannten Muster eingeschlossene Fläche zu errechnen und als Wert 66 direkt im angezeigten Bild 30 auszugeben. Dies kann automatisch für alle erkannten Muster einer Szene 5 erfolgen oder als Folge einer Benutzerauswahl für bestimmte Muster.

Die Identifizierung kann insbesondere über einen lernfähigen Algorithmus ablaufen, der die interessanten Objekte anhand der Benutzerhistorie der Vorrichtung findet oder anhand von vordefinierten, im Gerät abgespeicherten Beispielen.

Es versteht sich, dass diese dargestellten Figuren nur mögliche Ausführungsbeispiele schematisch darstellen. Die verschiedenen Ansätze können ebenso miteinander wie mit Verfahren und Geräten des Stands der Technik kombiniert werden.

## Patentansprüche

1. Verfahren (100) zum bildbasierten Vermessen einer Szene (5) mittels einer handgehaltenen Vorrichtung (1), aufweisend
- eine Aufnahme (120) von mindestens einem ersten Bild und einem zweiten Bild der Szene (5) durch mindestens eine Kamera (3, 3a, 3b) der Vorrichtung (1), wobei das erste Bild und das zweite Bild einen überlappenden Bildbereich aufweisen,
- ein photogrammetrisches Auswerten des ersten und des zweiten Bildes, und
- eine graphische Ausgabe einer Abbildung (30) der Szene (5) auf einer Anzeigeeinheit (20),
- eine automatisch ablaufende Kantenvermessungsfunktionalität, im Rahmen welcher jeweils ohne Benutzereingriff
- anhand des ersten und des zweiten Bildes der Szene (5) Kanten (60, 61) in der Szene (5) identifiziert werden,
- basierend auf den photogrammetrisch ausgewerteten Bildern Kantenlängen (62) der identifizierten Kanten (60, 61) ermittelt werden, und
- die ermittelten Kantenlängen (62) in der Abbildung (30) der Szene (5) angezeigt werden; **gekennzeichnet durch** ein Identifizieren von Flächen (55) in den Bildern und ein Markieren der identifizierten Flächen (55) in der Abbildung (30) der Szene (5), wobei
- die Flächen (55) anhand typischer Dimensionen und/oder Muster identifiziert werden, wobei die Flächen (55) Fenstern oder Türen in der Szene (5) zugeordnet sind und für Fenster bzw. Türen typische Dimensionen aufweisen, und/oder
- die Flächen (55) durch einen lernfähigen Algorithmus identifiziert werden.

2. Verfahren (100) nach Anspruch 1,
**dadurch gekennzeichnet, dass**
im Rahmen der Kantenvermessungsfunktionalität identifizierte Kanten (60, 61) in der Abbildung (30) der Szene (5) graphisch hervorgehoben werden, insbesondere farblich markiert werden.

3. Verfahren (100) nach Anspruch 1 oder Anspruch 2,
**gekennzeichnet durch**
- eine stereoskopische Aufnahme (120) des ersten Bildes der Szene (5) durch eine erste Kamera (3a) der Vorrichtung (1) und des zweiten Bildes der Szene (5) durch eine zweite Kamera (3b) der Vorrichtung (1), und
- ein stereophotogrammetrisches Auswerten des ersten und des zweiten Bildes,
wobei
- anhand der Bilder der Szene (5) Kanten (60, 61) in der Szene (5) identifiziert werden, und
- basierend auf den stereophotogrammetrisch ausgewerteten Bildern Kantenlängen (62) der identifizierten Kanten (60, 61) ermittelt werden.

4. Verfahren (100) nach einem der vorangehenden Ansprüche, **gekennzeichnet durch**
eine Entfernungsmessung zu einer Oberfläche (50) der Szene (5), insbesondere gleichzeitig mit der Aufnahme (120), wobei eine gemessene Entfernung beim photogrammetrischen Auswerten berücksichtigt wird, insbesondere zum Skalieren.

5. Verfahren (100) nach einem der vorangehenden Ansprüche, **dadurch gekennzeichnet, dass**
das Ermitteln der Länge einer Kante (60) umfasst:
- ein Identifizieren von zwei Endpunkten der Kante (60), und
- ein Ermitteln einer Entfernung zwischen den zwei Endpunkten mittels Photogrammetrie, insbesondere Stereophotogrammetrie.

6. Verfahren (100) nach einem der vorangehenden Ansprüche, **dadurch gekennzeichnet, dass**
das photogrammetrische Auswerten des ersten und des zweiten Bildes ein Generieren eines 3D-Modells der Szene (5) umfasst, insbesondere in Form einer Punktwolke, wobei
- das 3D-Modell benutzt wird, um die Kante (60) zu identifizieren, und/oder
- zum Ermitteln der Länge einer in den Bildern identifizierten Kante (60) die entsprechende Kante im 3D-Modell identifiziert wird.

7. Verfahren (100) nach einem der vorangehenden Ansprüche, **dadurch gekennzeichnet, dass**
im Rahmen der Kantenvermessungsfunktionalität unvollständige Kanten (61) ermittelt werden, wobei eine Kante als unvollständige Kante (61) ermittelt wird, wenn kein oder nur ein Endpunkt dieser Kante (61) im ersten und/oder zweiten Bild abgebildet ist, insbesondere wobei
- unvollständige Kanten (61) in der Abbildung (30) der Szene (5) graphisch anders hervorgehoben werden als vollständige Kanten (60), deren zwei Endpunkte in einem der aufgenommenen Bilder abgebildet sind;
und/oder
- für unvollständige Kanten (61) keine Längen ermittelt oder angezeigt werden.

8. Verfahren (100) nach einem der vorangehenden Ansprüche, **gekennzeichnet durch**
eine Eingabeaufforderung, die zusammen mit der Abbildung (30) der Szene (5) auf der Anzeigeeinheit (20) angezeigt wird, wobei die Eingabeaufforderung eine Aufforderung an einen Benutzer enthält, einen Bereich der Abbildung zu markieren, in welchem Kanten (60, 61) identifiziert werden sollen.

9. Verfahren (100) nach einem der vorangehenden Ansprüche, **dadurch gekennzeichnet, dass** zusätzlich
- automatisch Werte für die Flächeninhalte der identifizierten Flächen (55) berechnet und in der Abbildung (30) der Szene (5) angezeigt werden, und/oder
- die Flächen (55) anhand einer Vielzahl, insbesondere vier, die Flächen (55) umschliessender Kanten (60, 61) identifiziert werden.

10. Handhaltbare Vorrichtung (1) zum bildbasierten Vermessen einer Szene (5), insbesondere gemäss einem Verfahren nach einem der vorangehenden Ansprüche, aufweisend
- ein Gehäuse (10) mit einer Vorderseite (11) und einer Rückseite (12);
- mindestens eine Kamera (3, 3a, 3b) zur Aufnahme von Bildern der Szene (5);
- eine Steuereinheit zum Bewirken einer Aufnahme von Bildern der Szene (5);
- eine Auswerteeinheit mit einem Algorithmus zum photogrammetrischen Auswerten der Bilder; und
- eine Anzeigeeinheit (20), die auf der Vorderseite (11) angeordnet ist, zur Anzeige einer Abbildung (30) der Szene, wobei die Auswerteeinheit einen Algorithmus zum Ausführen einer automatisch ablaufenden Kantenvermessungsfunktionalität und einer auf dieser basierenden Mustererkennungsfunktionalität aufweist,
wobei die Auswerteeinheit im Rahmen der Kantenvermessungsfunktionalität dazu ausgestaltet ist, jeweils ohne Benutzereingriff
- anhand der Bilder der Szene (5) Kanten (60, 61) in der Szene (5) zu identifizieren, und
- basierend auf den photogrammetrisch ausgewerteten Bildern Kantenlängen der identifizierten Kanten (60, 61) zu ermitteln,
wobei die Steuereinheit dazu ausgestaltet ist, auf der Anzeigeeinheit (20) die ermittelten Kantenlängen als Werte (62) in der Abbildung (30) der Szene (5) anzeigen zu lassen,
**dadurch gekennzeichnet, dass** die Auswerteeinheit im Rahmen der Mustererkennungsfunktionalität dazu ausgestaltet ist, in den Bildern Flächen (55) zu identifizieren, wobei
- die Flächen (55) anhand typischer Dimensionen und/oder Muster identifiziert werden, wobei die Flächen (55) Fenstern oder Türen in der Szene (5) zugeordnet sind und für Fenster bzw. Türen typische Dimensionen aufweisen, und/oder
- die Flächen (55) durch einen lernfähigen Algorithmus identifiziert werden,
wobei die Steuereinheit dazu ausgestaltet ist, auf der Anzeigeeinheit (20) die identifizierten Flächen (55) in der Abbildung (30) der Szene (5) zu markieren.

11. Vorrichtung (1) nach Anspruch 10,
**gekennzeichnet durch**
eine erste Kamera (3a) und eine zweite Kamera (3b) zur Aufnahme von Bildern der Szene (5), wobei die Kameras (3a, 3b) mit einem festen Abstand zueinander auf der Rückseite (12) angeordnet sind, wobei
- die Steuereinheit zum Bewirken einer stereoskopischen Aufnahme von Bildern der Szene (5) mit einer Aufnahme eines ersten Bildes mittels der ersten Kamera (3a) und eines zweiten Bildes mittels der zweiten Kamera (3b) ausgestaltet ist; und
- die Auswerteeinheit einen Algorithmus zum stereophotogrammetrischen Auswerten des ersten Bildes und des zweiten Bildes aufweist.

12. Vorrichtung (1) nach Anspruch 10 oder Anspruch 11, **gekennzeichnet durch**
einen Laserentfernungsmesser (4), wobei
- die Steuereinheit zum Bewirken einer Messung einer Entfernung (d) zu einer Oberfläche (50) der Szene (5) mittels des Laserentfernungsmesser (4) ausgestaltet ist, insbesondere gleichzeitig mit der Aufnahme; und
- die Auswerteeinheit dazu ausgestaltet ist, die Entfernung (d) beim photogrammetrischen Auswerten zu berücksichtigen.

13. Vorrichtung (1) nach einem der Ansprüche 10 bis 12, **gekennzeichnet durch**
eine Speichereinheit zum Speichern von
- Bilddaten der mindestens einen Kamera (3, 3a, 3b),
- Koordinaten von Endpunkten identifizierter Kanten (60, 61), und
- den Werten (62) für die Längen der Kanten (60, 61).

14. Vorrichtung (1) nach einem der Ansprüche 10 bis 13, **gekennzeichnet durch**
einen Touchscreen als Anzeigeeinheit (20), wobei die Steuereinheit dazu ausgestaltet ist, auf der Anzeigeeinheit (20) zusammen mit der Abbildung (30) der Szene (5) eine Eingabeaufforderung anzeigen zu lassen, insbesondere wobei die Eingabeaufforderung eine Aufforderung an einen Benutzer enthält, einen Bereich der Abbildung zu markieren, in welchem Kanten (60, 61) identifiziert werden sollen.

15. Computerprogrammprodukt mit Programmcode, der auf einem maschinenlesbaren Träger gespeichert ist, zur Ausführung eines Verfahrens zum bildbasierten Vermessen einer Szene (5) mittels einer handgehaltenen Vorrichtung (1) nach einem der Ansprüche 1 bis 9, wobei das Programm in einer Recheneinheit der Vorrichtung (1), insbesondere der Vorrichtung (1) nach einem der Ansprüche 10 bis 14, ausgeführt wird.

## Claims

1. Method (100) for an image-based measurement of a scene (5) using a handheld apparatus (1), including
- a recording (120) of at least one first image and one second image of the scene (5) by at least one camera (3, 3a, 3b) of the apparatus (1), wherein the first image and the second image have an overlapping image region,
- a photogrammetric evaluating of the first and the second image, and
- a graphic outputting of an image representation (30) of the scene (5) on a display unit (20),
an automatically proceeding edge measurement functionality, as part of which, in each case without user intervention,
- edges (60, 61) in the scene (5) are identified utilizing the first and the second image of the scene (5),
- edge lengths (62) of the identified edges (60, 61) are ascertained based on the photogrammetrically evaluated images, and
- the ascertained edge lengths (62) are displayed in the image representation (30) of the scene (5);
**characterized by**
an identifying of surfaces (55) in the images, and a marking of the identified surfaces (55) in the image representation (30) of the scene (5), wherein
- the surfaces (55) are identified on the basis of typical dimensions and/or patterns, wherein the surfaces (55) are assigned to windows or doors in the scene (5) and have dimensions that are typical of windows or doors, and/or
- the surfaces (55) are identified using an adaptive algorithm.

2. Method (100) according to Claim 1,
**characterized in that**
edges (60, 61), which are identified as part of the edge measurement functionality, in the image representation (30) of the scene (5) are graphically highlighted, in particular marked in color.

3. Method (100) according to Claim 1 or 2, **characterized by**
- a stereoscopic recording (120) of the first image of the scene (5) by a first camera (3a) of the apparatus (1) and of the second image of the scene (5) by a second camera (3b) of the apparatus (1), and
- a stereo-photogrammetric evaluating of the first and the second image,
wherein
- edges (60, 61) in the scene (5) are identified utilizing the images of the scene (5), and
- edge lengths (62) of the identified edges (60, 61) are ascertained based on the stereo-photogrammetrically evaluated images.

4. Method (100) according to any one of the preceding claims, **characterized by**
a distance measurement to a surface (50) of the scene (5), in particular at the same time as the recording (120), wherein a measured distance is taken into account during the photogrammetric evaluation, in particular for scaling.

5. Method (100) according to any one of the preceding claims,
**characterized in that**
the ascertaining of the length of an edge (60) comprises:
- an identifying of two end points of the edge (60), and
- an ascertaining of a distance between the two end points using photogrammetry, in particular stereophotogrammetry.

6. Method (100) according to any one of the preceding claims,
**characterized in that**
the photogrammetric evaluating of the first and of the second image comprises a generating of a 3D model of the scene (5), in particular in the form of a point cloud, wherein
- the 3D model is used to identify the edge (60), and/or,
- for ascertaining the length of an edge (60) that has been identified in the images, the corresponding edge is identified in the 3D model.

7. Method (100) according to any one of the preceding claims,
**characterized in that**
as part of the edge measurement functionality, incomplete edges (61) are ascertained, wherein an edge is ascertained as being an incomplete edge (61) if no end point or only one end point of said edge (61) is imaged in the first and/or second image, in particular wherein
- incomplete edges (61) are highlighted graphically in the image representation (30) of the scene (5) in a different manner than complete edges (60), whose two end points are imaged in one of the recorded images; and/or
- no lengths for incomplete edges (61) are ascertained or displayed.

8. Method (100) according to any one of the preceding claims,
**characterized by**
an input request, which is displayed on the display unit (20) together with the image representation (30) of the scene (5), wherein the input request contains a request for a user to mark a region of the image representation in which edges (60, 61) are to be identified.

9. Method (100) according to any one of the preceding claims,
**characterized in that**
additionally
- values for the surface contents of the identified surfaces (55) are automatically calculated and displayed in the image representation (30) of the scene (5),
- the surfaces (55) are identified on the basis of a plurality of, for example four, edges (60, 61), which enclose the surfaces (55).

10. Portable apparatus (1) for the image-based measurement of a scene (5), in particular in accordance with a method according to any one of the preceding claims, having
- a housing (10) with a front side (11) and a rear side (12) ;
- at least one camera (3, 3a, 3b) for recording images of the scene (5);
- a control unit for effecting a recording of images of the scene (5);
- an evaluation unit with an algorithm for photogrammetric evaluation of the images; and
- a display unit (20), which is arranged on the front side (11), for displaying an image representation (30) of the scene,
whereby
the evaluation unit includes an algorithm for performing an automatically proceeding edge measurement functionality and a pattern recognition functionality based thereon, whereby as part of the edge measurement functionality the evaluation unit is configured, in each case without user intervention,
- to identify edges (60, 61) in the scene (5) on the basis of the images of the scene (5), and
- to ascertain edge lengths of the identified edges (60, 61) based on the photogrammetrically evaluated images, wherein the control unit is configured to enable the ascertained edge lengths to be displayed on the display unit (20) as values (62) in the image representation (30) of the scene (5),
**characterized in that**
the evaluation unit is configured within the scope of the pattern recognition functionality
to identify surfaces (55) in the images, and a marking of the identified surfaces (55) in the image representation (30) of the scene (5), wherein
- the surfaces (55) are identified on the basis of typical dimensions and/or patterns, wherein the surfaces (55) are assigned to windows or doors in the scene (5) and have dimensions that are typical of windows or doors, and/or
- the surfaces (55) are identified using an adaptive algorithm,
whereby the evaluation unit is configured to mark the identified surfaces (55) in the image representation (30) of the scene on the display unit (20).

11. Apparatus (1) according to Claim 10,
**characterized by**
a first camera (3a) and a second camera (3b) for recording images of the scene (5), wherein the cameras (3a, 3b) are arranged on the rear side (12) with a fixed distance from one another, wherein
- the control unit is configured to effect a stereoscopic recording of images of the scene (5) with a recording of a first image using the first camera (3a) and of a second image using the second camera (3b); and
- the evaluation unit includes an algorithm for stereo-photogrammetrically evaluating the first image and the second image.

12. Apparatus (1) according to Claim 10 or 11, **characterized by**
a laser rangefinder (4), wherein
- the control unit is configured for effecting a measurement of a distance (d) from a surface (50) of the scene (5) using the laser rangefinder (4), in particular at the same time as the recording; and
- the evaluation unit is configured to take into account the distance (d) during the photogrammetric evaluation.

13. Apparatus (1) according to any one of Claims 10 to 12, **characterized by**
a storage unit for storing
- image data of the at least one camera (3, 3a, 3b),
- coordinates of end points of identified edges (60, 61), and
- the values (62) for the lengths of the edges (60, 61).

14. Apparatus (1) according to any one of Claims 10 to 13, **characterized by**
a touchscreen as the display unit (20), wherein the control unit is configured to enable an input request to be displayed on the display unit (20) together with the image representation (30) of the scene (5), in particular wherein the input request contains a request for a user to mark a region of the image representation in which edges (60, 61) are to be identified.

15. Computer program product with program code, which is stored on a machine-readable carrier, for performing a method for an image-based measurement of a scene (5) using a handheld apparatus (1), in particular for performing the method (100) according to any one of Claims 1 to 9, wherein the program is executed in a computation unit of the apparatus (1), in particular the apparatus (1) according to any one of Claims 10 to 14.

## Revendications

1. Procédé (100) de mesure par prise d'image d'une scène (5) au moyen d'un dispositif (1) porté à la main, comprenant :
- une prise (120) d'au moins une première image et une deuxième image de la scène (5) par au moins une caméra (3, 3a, 3b) du dispositif (1), ladite première image et ladite deuxième image présentant un domaine de recouvrement,
- une évaluation photogrammétrique de la première et de la deuxième image, et
- la production graphique d'une représentation (30) de la scène (5) sur une unité d'affichage (20),
- une fonctionnalité de mesure d'arêtes, à exécution automatique, dans le cadre de laquelle, sans intervention de l'utilisateur :
- des arêtes (60, 61) sont identifiées dans la scène (5) à partir de la première et de la deuxième image de la scène (5),
- la longueur d'arête (62) des arêtes (60, 61) identifiées est obtenue à partir des images évaluées de manière photogrammétrique, et
- les longueurs d'arête (62) obtenues sont affichées dans la représentation (30) de la scène (5) ;
**caractérisé par**
une identification de surfaces (55) dans les images et un marquage des surfaces identifiées (55) dans la représentation (30) de la scène (5),
étant entendu que
- les surfaces (55) sont identifiées à partir de dimensions et/ou motifs typiques, les surfaces (55) étant affectées à des portes ou des fenêtres présentes dans la scène (5) et présentant des dimensions typiques pour les portes ou les fenêtres, et/ou
- les surfaces (55) sont identifiées par un algorithme capable d'apprendre.

2. Procédé (100) selon la revendication 1,
**caractérisé en ce que**
des arêtes (60, 61) identifiées dans le cadre de la fonctionnalité de mesure d'arêtes sont mises en évidence graphiquement dans la représentation (30) de la scène (5), notamment marquées en couleur.

3. Procédé (100) selon la revendication 1 ou 2,
**caractérisé par**
- une prise stéréoscopique (120) de la première image de la scène (5) par une première caméra (3a) du dispositif (1) et de la deuxième image de la scène (5) par une deuxième caméra (3b) du dispositif (1), et
- une évaluation stéréophotogrammétrique de la première et de la deuxième image,
dans lequel
- des arêtes (60, 61) sont identifiées dans la scène (5) à partir des images de la scène (5),
- la longueur d'arête (62) des arêtes (60, 61) identifiées est obtenue à partir des images évaluées de manière stéréophotogrammétrique.

4. Procédé (100) selon l'une des revendications précédentes,
**caractérisé par**
une mesure de distance à une surface (50) de la scène (5), notamment simultanée avec la prise d'image (120), la distance mesurée étant prise en compte dans l'évaluation photogrammétrique, notamment pour le changement d'échelle.

5. Procédé (100) selon l'une des revendications précédentes,
**caractérisé en ce que**
l'obtention de la longueur d'une arête (60) comprend :
- l'identification de deux extrémités de l'arête (60), et
- l'obtention d'une distance entre lesdites deux extrémités par photogrammétrie, notamment par stéréophotogrammétrie.

6. Procédé (100) selon l'une des revendications précédentes,
**caractérisé en ce que**
l'évaluation photogrammétrique de la première image et de la deuxième image comprend la génération d'un modèle 3D de la scène (5), notamment sous la forme d'un nuage de points,
dans lequel
- ledit modèle 3D est utilisé pour identifier l'arête (60), et/ou
- pour obtenir la longueur d'une arête (60) identifiée dans les images, l'arête correspondante est identifiée dans ledit modèle 3D.

7. Procédé (100) selon l'une des revendications précédentes,
**caractérisé en ce que**
des arêtes incomplètes (61) sont obtenues dans le cadre de la fonctionnalité de mesure d'arêtes, une arête étant obtenue en tant qu'arête incomplète (61) lorsqu'aucune ou une seule extrémité de cette arête (61) est représentée dans la première et/ou la deuxième image,
étant entendu notamment que
- les arêtes incomplètes (61) sont mises en évidence graphiquement dans la représentation (30) de la scène (5) différemment des arêtes complètes (60), dont les deux extrémités sont représentées dans une des images prises ; et/ou
- aucune longueur n'est obtenue ou affichée pour les arêtes incomplètes (61).

8. Procédé (100) selon l'une des revendications précédentes,
**caractérisé par**
une invite affichée avec la représentation (30) de la scène (5) sur l'unité d'affichage (20), ladite invite comprenant une incitation pour un utilisateur à marquer un domaine de la représentation dans lequel des arêtes (60, 61) doivent être identifiées.

9. Procédé (100) selon l'une des revendications précédentes,
**caractérisé en ce que,** en outre,
- des valeurs pour les contenus surfaciques des surfaces (55) identifiées sont calculées et affichées automatiquement dans la représentation (30) de la scène (5), et/ou
- les surfaces (55) sont identifiées à partir de plusieurs, notamment quatre, arêtes (60, 61) délimitant les surfaces (55).

10. Dispositif (1) pouvant être porté à la main et destiné à mesurer par prise d'image une scène (5), notamment en suivant un procédé selon l'une des revendications précédentes, présentant :
- un boîtier (10) avec une face avant (11) et une face arrière (12) ;
- au moins une caméra (3, 3a, 3b) destinée à prendre des images de la scène (5) ;
- une unité de commande destinée à déclencher une prise d'images de la scène (5) ;
- une unité d'évaluation dotée d'un algorithme destiné à évaluer les images de manière photogrammétrique ; et
- une unité d'affichage (20) disposée sur ladite face avant (11) et destinée à afficher une représentation (30) de la scène,
dans lequel
l'unité d'évaluation possède un algorithme pour l'exécution d'une fonctionnalité automatique de mesure d'arêtes et, reposant sur celle-ci, une fonctionnalité de reconnaissance de motif, ladite unité d'évaluation étant conçue pour, dans le cadre de la fonctionnalité de mesure d'arêtes et sans intervention de l'utilisateur :
- identifier des arêtes (60, 61) dans la scène (5) à partir des images de la scène (5),
- obtenir la longueur des arêtes (60, 61) identifiées à partir des images évaluées de manière photogrammétrique,
ladite unité de commande étant conçue pour faire afficher les longueurs d'arête obtenues en tant que valeurs (62) dans la représentation (30) de la scène (5) sur l'unité d'affichage (20),
**caractérisé en ce que**
l'unité d'évaluation est conçue pour, dans le cadre de la fonctionnalité de reconnaissance de motif, identifier des surfaces (55) dans les images,
étant entendu que
- les surfaces (55) sont identifiées à partir de dimensions et/ou motifs typiques, les surfaces (55) étant affectées à des portes ou des fenêtres dans la scène (5) et présentant des dimensions typiques pour les portes ou les fenêtres, et/ou
- les surfaces (55) sont identifiées par un algorithme capable d'apprendre, ladite unité de commande étant conçue pour marquer les surfaces identifiées (55) dans la représentation (30) de la scène (5) sur l'unité d'affichage (20).

11. Dispositif (1) selon la revendication 10,
**caractérisé par**
une première caméra (3a) et une deuxième caméra (3b) destinées à prendre des images de la scène (5), lesdites caméras (3a, 3b) étant disposées à une distance mutuelle fixe sur la face arrière (12),
étant entendu que
- l'unité de commande est conçue pour déclencher une prise stéréoscopique d'images de la scène (5), une première image étant prise par la première caméra (3a) et une deuxième image étant prise par la deuxième caméra (3b) ; et
- l'unité d'évaluation est dotée d'un algorithme pour l'évaluation stéréophotogrammétrique de la première image et de la deuxième image.

12. Dispositif (1) selon la revendication 10 ou 11,
**caractérisé par**
un distancemètre laser (4), étant entendu que
- l'unité de commande est conçue pour déclencher une mesure de distance (d) à une surface (50) de la scène (5) au moyen dudit distancemètre laser (4), notamment de manière simultanée avec la prise d'image ; et
- l'unité d'évaluation est conçue pour tenir compte de ladite distance (d) dans l'évaluation photogrammétrique.

13. Dispositif (1) selon l'une des revendications 10 à 12,
**caractérisé par**
une unité d'enregistrement destinée à enregistrer :
- des données d'image de l'au moins une caméra (3, 3a, 3b),
- les coordonnées des extrémités d'arêtes identifiées (60, 61), et
- les valeurs (62) de longueur des arêtes (60, 61).

14. Dispositif (1) selon l'une des revendications 10 à 13,
**caractérisé par**
un écran tactile servant d'unité d'affichage (20), l'unité de commande étant conçue pour faire afficher une invite, sur l'unité d'affichage (20), avec la représentation (30) de la scène (5), ladite invite comprenant notamment une incitation pour un utilisateur à marquer un domaine de la représentation dans lequel des arêtes (60, 61) doivent être identifiées.

15. Produit-programme d'ordinateur comportant un code de programme enregistré sur un support lisible par une machine, destiné à exécuter un procédé de mesure par prise d'image d'une scène (5) selon l'une des revendications 1 à 9 au moyen d'un dispositif (1) porté à la main, le programme étant exécuté dans une unité informatique dudit dispositif (1), notamment du dispositif (1) selon l'une des revendications 10 à 14.
